# EUROPEAN PATENT APPLICATION

(11) **EP 2 945 051 A1**
(43) Date of publication of application: **18.11.2015**
(21) Application number: 14168601.4
(22) Date of filing: 16.05.2014
(51) Int. Cl.: G06F 3/12, G03G 15/00, B41J 2/175

(54) **Method for predicting consumption of supply material in a printing system**

(71) Applicant: Océ-Technologies B.V., 5914 CA Venlo (NL)
(72) Inventor: The designation of the inventor has not yet been filed
(74) Representative: van der Elsen, Jacobus Theodorus Henricus

(57) **Abstract**

The invention relates to a method for predicting consumption of supply material for a plurality of print jobs in a printing system, each print job intended to consume supply material from at least one supply material container from a plurality of supply material containers in the printing system, the method comprising the steps of scheduling the plurality of print jobs in time, scheduling maintenance actions in time, for each supply material container establishing a supply material level in the supply material container before printing the plurality of print jobs, for each supply material container calculating a job consumption of supply material from the supply material container for each scheduled print job, for each supply material container calculating a maintenance consumption of supply material from the supply material container for each scheduled maintenance action, and for each supply material container calculating at which print job the supply material level of the supply material container reaches a zero supply material level in the supply material container taking into account the calculated job consumption of the supply material in the supply material container and taking into account the calculated maintenance consumption of the supply material in the supply material container. The invention also relates to a print system suitable for applying the method.

## Description

### Field of the invention

The present invention relates to a method for predicting consumption of supply material for a plurality of print jobs in a printing system, each print job intended to consume supply material from at least one supply material container from a plurality of supply material containers in the printing system, the method comprising the steps of scheduling the plurality of print jobs in time, scheduling maintenance actions in time, for each supply material container establishing a supply material level in the supply material container before printing the plurality of print jobs, and for each supply material container calculating a job consumption of supply material from the supply material container for each scheduled print job. A consumption of supply material during a print job may be used to produce printed images or objects. A consumption of supply material during a maintenance action may be seen as a necessary waste of supply material.
The present invention further relates to a printing system configured to apply the method according to the invention.

### Background of the invention

Nowadays print systems provide an estimated required amount of supply material per print job. Nowadays print systems also provide a current status of the supply material levels in the printing system, for example in volume percentage of the supply material container or in weight percentage of a fully loaded supply material container. Nowadays print systems also provide a job schedule of scheduled jobs in time ahead. Nowadays on print systems also maintenance actions have to be carried out which take time and waste certain amounts of supply material. This situation makes it hard for the operator to know at which time and/or at which scheduled print job a supply container becomes empty.

It is an objective of the present invention to provide a method for accurately predicting the moment that a supply material container gets empty.

### Summary of the invention

According to the present invention the objective is achieved by the method as described here-above, wherein the method comprises the steps of for each supply material container calculating a maintenance consumption of supply material from the supply material container for each scheduled maintenance action, and for each supply material container calculating at which print job the supply material level of the supply material container reaches a zero supply material level in the supply material container taking into account the calculated job consumption of the supply material in the supply material container and taking into account the calculated maintenance consumption of the supply material in the supply material container.

The maintenance actions are scheduled in time among the scheduled jobs. The consumption during a maintenance action of a supply material is known. A maintenance strategy of the printing system may be known, for example print head cleaning, print head wiping, nozzle spitting, calibration actions, and an amount of supply material, for example paper and ink, that the maintenance action produces. This amount of supply material may be retrieved from the embedded software module of the printing system. The consumption during each print job and each maintenance action is known. When print jobs in a print queue are defined and rasterized beforehand and maintenance actions are scheduled, required amounts of supply material per job and supply material needed for maintenance actions may be summed up. By comparing a total sum of required supply material against the available supply material in the containers, it is predictable at what moment a supply material level is insufficient for printing subsequent print jobs and/or subsequent maintenance actions, and how much supply material is needed in total compared to the actual amount. Therefore by the method according to the invention it is realized that a moment in time at which a zero supply material level is reached is established. Such a moment is then known to the operator long before that moment in time is reached. Unattended printing becomes possible and easily scheduled because such a moment in time is known beforehand.

According to an embodiment of the method the supply material is at least one material out of a group of inks, toners, plastics, metals.
An inkjet printer having one or more ink containers for one or more colored inks may have an establishing device for establishing an ink level in each ink container. Maintenance actions may be scheduled for flushing, wiping, or purging a print head of the inkjet printer which lead to a consumption or a waste of ink.
An electrographic printer having a one or more toner containers may have an establishing device for establishing a toner level in the toner container. Maintenance actions may be scheduled for calibration tests which lead to a consumption or a waste of toner.
A 3D printer having one or more containers for one or more plastics may have an establishing device for establishing a plastic level in each container for the plastic. Maintenance actions may be scheduled for cleaning the channels for plastic throughput which lead to a consumption or waste of the plastic material.
A metal jet printer having one or more containers for one or more fluidal metals may have an establishing device for establishing a fluidal metal level in each ink container. Maintenance actions may be scheduled for cleaning the channels for metal throughput which lead to a consumption or waste of the fluidal metal.

According to an embodiment of the method the supply material is a medium material. A medium material may be paper, plastic sheets, overhead sheets, transparent sheets, textile, board material etc. A printing system having one or more input holders for rolls or trays for stacks of sheets may have an establishing device for establishing a remaining amount of medium material on the roll or in the tray. Maintenance actions may be scheduled for calibration tests which lead to a consumption or a waste of medium material.

According to an embodiment the method comprises the step of for at least one supply material container of the plurality of supply material containers displaying on a time line the plurality of print jobs and an indicative item at the print job at which the supply material level in the at least one supply material container reaches the zero supply material level. By doing so the moment in time that a supply material is exhausted becomes visible for the operator. The operator knows which supply material, if more than one supply material container is available, becomes exhausted.

According to an embodiment the method comprises the step of displaying an indicative item at the print job at which a supply material level of an supply material container of the plurality of supply material containers reaches the zero supply material level first in time compared to supply material levels of the other supply material containers. By doing so, the operator knows until which moment in time unattended printing is possible.

According to an embodiment the method comprises the step of for each print job on the time line retrieving a print mode specified in print job settings of the print job and rasterizing at least one image of the print job and for each print job on the time line calculating the amount of supply material consumption for each supply material container based on the at least one rasterized image and the retrieved print mode. Each print mode of a printing system may lead to another amount of supply material intended to be used for a print job. When an image is rasterized, the print mode is known and also a number of passes of a print head of the printing system, halftoning settings and other printer specific settings. In case of a color ink printing system , an amount of needed ink is known for each color, for example CMYK. This information may be retrieved by means of embedded software of the printing system, since the embedded software may actually define which dots are going to be printed.

According to an embodiment the method comprises the step of establishing the actual contents of each supply material container of the plurality of supply material containers after a print job has been printed and/or after a maintenance job has been performed and adjusting the calculation of the zero supply material level for each supply material container. The actual content of a container may be checked after a print job is finished by means of the embedded software system.

According to an embodiment the method comprises the step of changing the print order of the plurality of print jobs and/or changing the maintenance order of the maintenance actions and for each supply material container recalculating at which print job the supply material level in the container reaches a zero supply material level taking into account the changed print order and/or the changed maintenance order respectively. A job order change triggers a recalculation of a zero supply material level. A new supply material load may also trigger a recalculation of the zero supply material level.

The invention also relates to a printing system for printing a plurality of print jobs, the printing system comprising supply material containers for a plurality of supply materials to be used when printing the plurality of print jobs, an establishing device for establishing a supply material level in the supply material container for each supply material of the plurality of supply materials before printing a print job of the plurality of print jobs, and a control unit for controlling the printing of the print jobs and for controlling maintenance actions to be performed during printing of the plurality of print jobs, the control unit comprising a scheduler for scheduling the print jobs and the maintenance actions on a time line, a calculator configured to calculate for each supply material of the plurality of supply materials a job consumption of the supply material from the supply material container for each job scheduled on the time line and to calculate for each supply material of the plurality of supply materials a maintenance consumption of the supply material from the supply material container for each maintenance action scheduled on the time line, wherein the calculator is configured to calculate for each supply material container at which print job the supply material level in the supply material container reaches a zero supply material level taking into account the calculated job consumptions of the supply material from the supply material container and the calculated maintenance consumptions of the supply material from the supply material container.

The invention also relates to a recording medium comprising computer executable program code configured to instruct at least one computer to perform the method according to the invention.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### Brief description of the drawings

Figure 1 shows a schematic view of a printing system configured to use the method according to the invention.
Figure 2 shows a schematic time line for print jobs and maintenance actions according to the invention.
Figure 2(b) shows domain objects according to the invention.
Figure 3 shows natural language representing actions according to the invention.
Figure 4 shows a workflow scheme according to the invention.
Figure 5 shows an architecture diagram of the model according to the invention.
Figure 6 shows a first sheet assembly according to the invention.
Figure 7 shows a second sheet assembly according to the invention.
Figure 8 shows an embodiment of the method according to the invention.

### Detailed description of the embodiments

The present invention will now be described with reference to the accompanying drawings, wherein the same or similar elements are identified with the same reference numerals throughout the several views.

The embodiments are explained by taking in the examples an ink jet printer as a printing system comprising a print head with nozzles as printing elements but are not limited to these choices. In principal any other printing system using any supply material mentioned here-above may use the methods according to the embodiments of the present invention. Another printing system according to the invention may be an electro-graphical printer, a metal jet printer or a 3D printer.

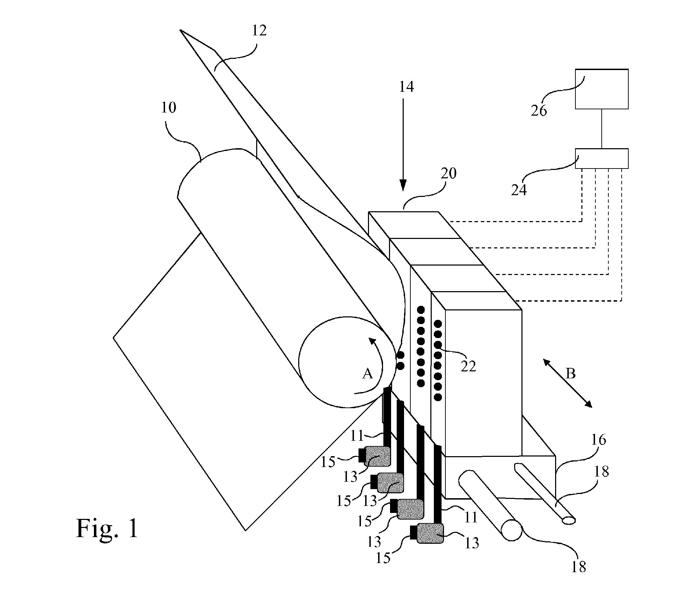

Figure 1 depicts schematically an ink jet printer comprising a platen 10 which serves for transporting a recording medium 12 in a sub-scanning direction (arrow A) past a print head unit 14. The print head unit 14 is mounted on a carriage 16 that is guided on guide rails 18 and is movable back and forth in a main scanning direction (arrow B) relative to the recording medium 12. In the example shown, the print head unit 14 comprises four print heads 20, one for each of the basic colours cyan, magenta, yellow and black. Each print head has a linear array of nozzles 22 extending in the sub-scanning direction. The nozzles 22 of the print heads 20 can be energised individually to eject ink droplets onto the recording medium 12, thereby to print a pixel on the paper. The nozzles 22 are provided with ink by means of conducts 11 which are connected to ink containers 13, one container for each colour of ink. The ink containers 13 are shown as small rectangles. In reality the ink containers may be larger in comparison to the print heads 20. Attached to an ink container 13 is a level sensor 15 for detecting a level of ink in the ink container 13. When the carriage 16 is moved in the direction B across the width of the recording medium 12, a swath of an image can be printed. The number of pixel lines of the swath corresponds to the number of nozzles 22 of each print head. When the carriage 16 has completed one pass, the recording medium 12 is advanced by the width of the swath, so that the next swath can be printed. Besides a printing system printing in swathes, a single pass printing system may also be envisioned. A page wide print head unit may also be envisioned.

The print heads 20 are controlled by a print head controller 24 which receives rasterized print data from an image processor 26 that is capable of high speed image processing. The image processor 26 may be incorporated in the printer or in a remote device, e. g. a print driver in a host computer. The print head controller 24 and the image processor 26 process the print data in a ripping process. Print jobs comprising image data are received by the image processor 26 and rasterized. The rasterized images are submitted to the print head controller 24. The print head controller 24 controls the print heads 20 in order to eject ink from the print heads 20. The ejected ink material establishes an image according to the rasterized image on the receiving medium 12. The print head controller 24 also controls the maintenance actions to be performed regarding the print head. Nozzles may be wiped, ink may be purged using ink from the ink containers 13 in a purge unit (not shown) besides the carriage 16. Calibration test cards may be printed using ink from the ink containers 13.

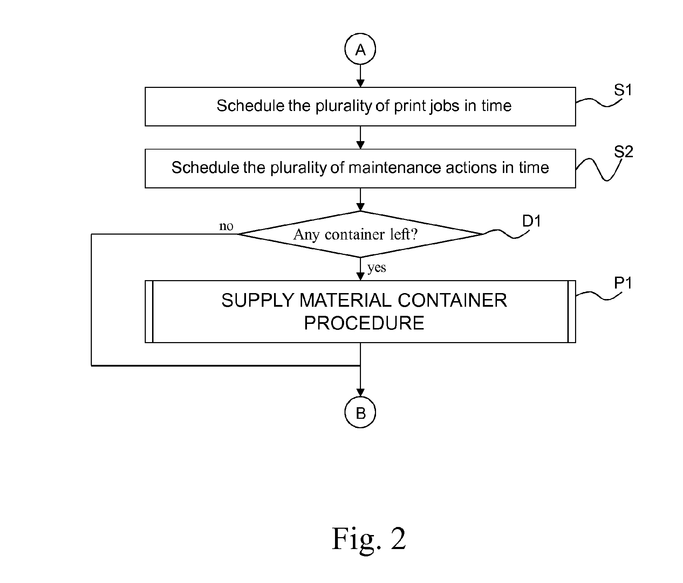

Figures 2 - 3 show diagrams of an embodiment of the method according to the invention. A consumption of supply material for a plurality of print jobs in a printing system is predicted. A print job consumes supply material from a supply material container from a plurality of supply material containers in the printing system. A starting point A leads to a first step S1 of the method.

According to the first step S1 the plurality of print jobs are scheduled in time. Scheduling of jobs may take place in a control unit of the printing system. The control unit may be a computer device at, near or remote from a printing unit of the printing system. Scheduling principles like First-In-First-Out (FIFO) or Last-In-First-Out (LIFO) may be applied. As an example, two print jobs are scheduled: Job1 and Job2. Job1 concerns 10 A0 color (CMYK) prints. Job2 concerns 20 A0 color (CMYK) prints.

According to a second step S2 maintenance actions may be scheduled in time. Scheduling of maintenance actions may also take place in the control unit of the printing system. Scheduling of a maintenance action may be on a time regular basis. Scheduling of maintenance actions may also be based on the amount of supply material which is intended to be consumed by the scheduled print jobs. As an example, before start of the print jobs Job1 and Job 2 a maintenance action is planned which will cost 10 ml per color (CMYK).

In the diagram in Figure 2 the first step S1 and the second step S2 are sequentially executed. However, a parallel execution or interacting execution may be envisioned according to the invention. Each kind of maintenance action may require a different type of maintenance interval, i.e. a time interval or an interval based on consumption by print jobs which are scheduled.

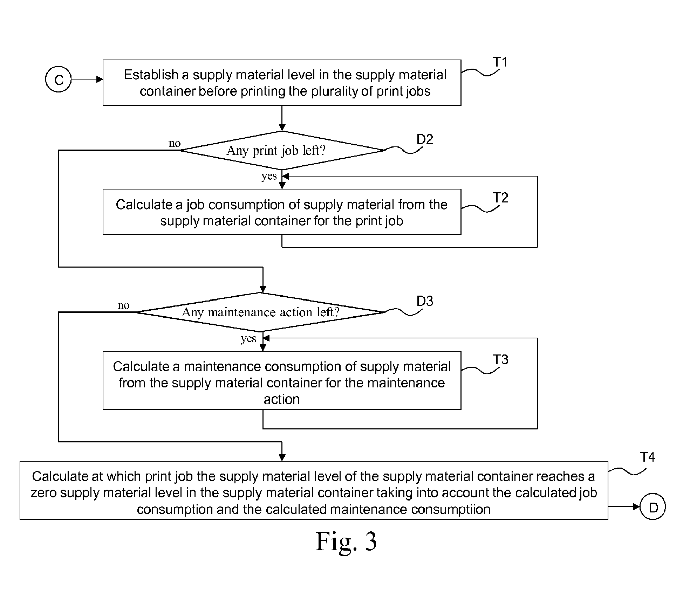

A next procedural step P1 comprises a procedure to be executed for each supply material container in a first loop over the plurality of supply material containers. The first loop starts in a first decision step D1 which checks if there is a supply material container which has not been dealt with.
If there is a supply material container not dealt with according to the method, the method proceeds with the procedural step P1 which is detailed in a diagram in Figure 3. If all supply material containers are dealt with the method ends in end point B.

Figure 3 shows in detail the supply material container procedure P1. A starting point C leads to a first step T1 of the supply material container procedure P1.

According to the first step T1 a supply material level in the supply material container is established before printing the plurality of scheduled print jobs. As an example the initial ink levels in the CMYK containers are established to be equal to: C: 40 ml, M: 130 ml, Y: 80 ml and K: 100 ml.

A second step T2 is executed for each scheduled print job in a second loop over the plurality of scheduled print jobs. The second loop starts in a second decision step D2 which checks if there is a scheduled print job which has not been dealt with. If there is a scheduled print job not dealt with according to the method, the method proceeds with the second step T2. If all scheduled print jobs are dealt with the method proceeds with a third step T3.

According to the second step T2 a job consumption of supply material from the supply material container is calculated for the scheduled print job. In the example, the printing system consumes on average 8 ml per A0 print with no CMYK specification. For a default print mode after rasterizing job1, the consumption becomes more precise per A0 print for job1: 6,5 ml in total, C: 2 ml, M: 1,5 ml, Y: 1 ml and K: 2 ml. However, a print mode known as a double pass mode is applied. A multiplication factor 2 has to be applied to the ink consumption. The consumption per A0 print for Job1 equals: 13 ml in total, C: 4 ml, M: 3 ml, Y: 2 ml and K: 4 ml. The total consumption for 10 A0 prints of Job1 equals: C: 40 ml, M: 30 ml, Y: 20 ml and K: 40 ml. In general, consumption of supply material for a rasterized image on a lowest print mode has to be multiplied by a multiplication factor greater than one for a higher print mode. By a higher print mode is meant a print mode with a higher resolution or with application of more passes during printing.
For a double pass print mode after rasterizing job1, the consumption becomes more precise per A0 print for job2: 13 ml in total, C: 3 ml, M: 4 ml, Y: 1 ml and K: 5 ml. The total consumption for 20 A0 prints of Job1 equals: C: 60 ml, M: 80 ml, Y: 20 ml and K: 100 ml.

A third step T3 is executed for each scheduled maintenance action in a third loop over the plurality of scheduled maintenance actions. The third loop starts in a third decision step D3 which checks if there is a scheduled maintenance action which has not been dealt with. If there is a scheduled maintenance action not dealt with according to the method, the method proceeds with the third step T3. If all scheduled maintenance actions are dealt with the method proceeds with a fourth step T4.

According to the third step T3 a maintenance consumption of supply material from the supply material container is calculated for the scheduled maintenance action. Only one maintenance action is scheduled - before start of the print jobs Job1 and Job 2 - and this maintenance action will cost 40 ml ink in total, more precisely: C: 10 ml, M: 10 ml, Y: 10 ml and K: 10 ml.

It may be evident for the skilled person that the steps T1 - T3 may be executed in an arbitrary order. The steps may be executed sequential or in parallel or in a combination of a sequential order and a parallel order.

According to a fourth step T4 it is calculated at which print job the supply material level of the supply material container reaches a zero supply material level in the supply material container taking into account the calculated job consumption of the supply material in the supply material container and taking into account the calculated maintenance consumption of the supply material in the supply material container.
The color ink C from ink container C will exhaust during Job1, since the maintenance action before Job1 costs 10 ml and Job1 costs 40 ml C ink while the initial level of C ink was 40 ml. The zero level of the C ink container will be reached during Job1. Replenishment of the C ink container is to be advised before the start of Job1.
The color ink M from ink container M will not exhaust, since the maintenance action before Job1 costs 10 ml, Job1 costs 30 ml M ink and Job2 costs 80 ml M ink, while the initial level of M ink was 130 ml.
The color ink Y from ink container Y will not exhaust, since the maintenance action before Job1 costs 10 ml, Job1 costs 20 ml Y ink and Job2 costs 20 ml Y ink, while the initial level of Y ink was 80 ml.
The color ink K from ink container K will exhaust during Job2, since the maintenance action before Job1 costs 10 ml, Job1 costs 40 ml K ink and Job2 costs 100 ml K ink, while the initial level of K ink was 100 ml. The zero level of the K ink container will be reached during Job2. Replenishment of the K ink container is to be advised before the start of Job2.

The given example of Job1 and Job2 is rather uncomplicated for convenience reasons, but more complicated schedules of print jobs and schedules of maintenance jobs may be envisioned.

The procedure ends in an end point D.

The example is limited to print job and ink maintenance scheduling in an inkjet printing system. However, the invention may also be applied to other supply materials in another kind of printing system, like toner in electro-graphical printing, plastic in 3D plastic jet printing, metal in metal jet printing, or to recording media like paper, overhead sheets, rolls, textile in inkjet printing as well as in electro-graphical printing.

The skilled person will recognise that other embodiments are possible within the scope of the appended claims.

## Claims

1. Method for predicting consumption of supply material for a plurality of print jobs in a printing system, each print job intended to consume supply material from at least one supply material container from a plurality of supply material containers in the printing system, the method comprising the steps of
a) scheduling the plurality of print jobs in time,
b) scheduling maintenance actions in time,
c) for each supply material container establishing a supply material level in the supply material container before printing the plurality of print jobs,
d) for each supply material container calculating a job consumption of supply material from the supply material container for each scheduled print job,
e) for each supply material container calculating a maintenance consumption of supply material from the supply material container for each scheduled maintenance action, and
f) for each supply material container calculating at which print job the supply material level of the supply material container reaches a zero supply material level in the supply material container taking into account the calculated job consumption of the supply material in the supply material container and taking into account the calculated maintenance consumption of the supply material in the supply material container.

2. Method according to claim 1, wherein the supply material is at least one material out of a group of inks, toners, plastics, metals.

3. Method according to claim 1, wherein the supply material is a medium material.

4. Method according to claim 1, wherein the method comprises the step of for at least one supply material container of the plurality of supply material containers displaying on a time line comprising the plurality of print jobs and an indicative item at the print job at which the supply material level in the at least one supply material container reaches the zero supply material level.

5. Method according to claim 4, wherein the method comprises the step of displaying an indicative item at the print job at which a supply material level of an supply material container of the plurality of supply material containers reaches the zero supply material level first in time compared to supply material levels of the other supply material containers.

6. Method according to claim 1, wherein the method comprises the step of for each print job on the time line retrieving a print mode specified in print job settings of the print job and rasterizing at least one image of the print job and for each print job on the time line calculating the amount of supply material consumption for each supply material container based on the at least one rasterized image and the retrieved print mode.

7. Method according to claim 1, wherein the method comprises the step of establishing the actual contents of each supply material container of the plurality of supply material containers after a print job has been printed and/or after a maintenance job has been performed and adjusting the calculation in step f) accordingly.

8. Method according to claim 1, wherein the method comprises the step of changing the print order of the plurality of print jobs and/or changing the maintenance order of the maintenance actions and for each supply material container recalculating at which print job the supply material level in the container reaches a zero supply material level taking into account the changed print order and/or the changed maintenance order respectively.

9. Printing system for printing a plurality of print jobs, the printing system comprising supply material containers for a plurality of supply materials to be used when printing the plurality of print jobs, an establishing device for establishing a supply material level in the supply material container for each supply material of the plurality of supply materials before printing a print job of the plurality of print jobs, and a control unit for controlling the printing of the print jobs and for controlling maintenance actions to be performed during printing of the plurality of print jobs, the control unit comprising a scheduler for scheduling the print jobs and the maintenance actions on a time line, a calculator configured to calculate for each supply material of the plurality of supply materials a job consumption of the supply material from the supply material container for each job scheduled on the time line and to calculate for each supply material of the plurality of supply materials a maintenance consumption of the supply material from the supply material container for each maintenance action scheduled on the time line, wherein the calculator is configured to calculate for each supply material container at which print job the supply material level in the supply material container reaches a zero supply material level taking into account the calculated job consumptions of the supply material from the supply material container and the calculated maintenance consumptions of the supply material from the supply material container.

10. Recording medium comprising computer executable program code configured to instruct at least one computer to perform the method according to claim 1.
